# EUROPEAN PATENT APPLICATION

(11) **EP 4 535 262 A1**
(43) Date of publication of application: **09.04.2025**
(21) Application number: 24204647.2
(22) Date of filing: 04.10.2024
(51) Int. Cl.: G06Q 20/10, G06Q 30/04, G06Q 20/12, G06Q 20/14, G06Q 20/22

(54) **CREDIT-BASED TRANSACTION PROCESSING METHOD AND APPARATUS**

(30) Priority: 08.10.2023 CN 202311310560
(71) Applicant: Alipay (Hangzhou) Information Technology Co., Ltd., Hangzhou, Zhejiang 310000 (CN)
(72) Inventor: SHI, Xiangjian, Hangzhou, Zhejiang, 310000 (CN)
(74) Representative: Winter, Brandl - Partnerschaft mbB

(57) **Abstract**

Embodiments of this specification provide a credit-based transaction processing method and apparatus. The credit-based transaction processing method includes: querying, based on a credit payment channel selected by an institutional member of an institution for a commodity order, a payment configuration of the credit payment channel configured by a merchant; determining a payment type of the institutional member in the credit payment channel by using the payment configuration and credit data; sending a payment request for the commodity order to a payment platform if a payment condition in the payment type is triggered; and obtaining a to-be-settled bill generated by the payment platform based on a credit payment result, so that the institution settles the to-be-settled bill by using an institutional account.

## Description

### TECHNICAL FIELD

This specification relates to the field of data processing technologies, and in particular, to a credit-based transaction processing method and apparatus.

### BACKGROUND

With the continuous development and promotion of Internet technologies, the Internet provides increasingly more online services, for example, online transaction services. In a process of implementing online services or offline services, credit data starts to be introduced in increasingly more services, and the online services or offline services are processed based on the credit data. In a process of accessing services by users, various types of credit data are generated, and there is an increasingly large amount of credit data. In this process, a service provider faces relatively significant service pressure, and the service provider also faces relatively significant service challenges.

### SUMMARY

One or more embodiments of this specification provide a credit-based transaction processing method, applied to a transaction platform. The method includes: querying, based on a credit payment channel selected by an institutional member of an institution for a commodity order, a payment configuration of the credit payment channel configured by a merchant; determining a payment type of the institutional member in the credit payment channel based on the payment configuration and credit data; sending a payment request for the commodity order to a payment platform upon determining that a payment condition in the payment type is triggered, to make a credit payment for the commodity order based on a credit account of the institutional member in the credit payment channel; and obtaining a to-be-settled bill generated by the payment platform based on a credit payment result, to perform fund settlement processing with the credit payment channel for the to-be-settled bill by using an institutional account of the institution.

One or more embodiments of this specification provide another credit-based transaction processing method, applied to a payment platform. The method includes: receiving a payment request sent by a transaction platform for a commodity order after a payment condition in a payment type is triggered, where the payment type is determined based on a payment configuration of a credit payment channel configured by a merchant and credit data; making a credit payment for the commodity order based on a credit account of an institutional member of an institution in the credit payment channel in response to the payment request; and generating a to-be-settled bill based on a credit payment result, and returning the to-be-settled bill to the transaction platform, to perform fund settlement processing with the credit payment channel for the to-be-settled bill by using an institutional account of the institution.

One or more embodiments of this specification provide a credit-based transaction processing apparatus, running on a transaction platform. The apparatus includes: a query module, configured to query, based on a credit payment channel selected by an institutional member of an institution for a commodity order, a payment configuration of the credit payment channel configured by a merchant; a type determining module, configured to determine a payment type of the institutional member in the credit payment channel based on the payment configuration and credit data; a request sending module, configured to send a payment request for the commodity order to a payment platform upon determining that a payment condition in the payment type is triggered, to make a credit payment for the commodity order based on a credit account of the institutional member in the credit payment channel; and a bill obtaining module, configured to obtain a to-be-settled bill generated by the payment platform based on a credit payment result, to perform fund settlement processing with the credit payment channel for the to-be-settled bill by using an institutional account of the institution.

One or more embodiments of this specification provide another credit-based transaction processing apparatus, running on a payment platform. The apparatus includes: a request receiving module, configured to receive a payment request sent by a transaction platform for a commodity order after a payment condition in a payment type is triggered, where the payment type is determined based on a payment configuration of a credit payment channel configured by a merchant and credit data; a payment module, configured to make a credit payment for the commodity order based on a credit account of an institutional member of an institution in the credit payment channel in response to the payment request; and a bill generation module, configured to: generate a to-be-settled bill based on a credit payment result, and return the to-be-settled bill to the transaction platform, to perform fund settlement processing with the credit payment channel for the to-be-settled bill by using an institutional account of the institution.

One or more embodiments of this specification provide a credit-based transaction processing device, including: a processor; and a storage, configured to store computer-executable instructions. When the computer-executable instructions are executed, the processor is enabled to perform the following operations: querying, based on a credit payment channel selected by an institutional member of an institution for a commodity order, a payment configuration of the credit payment channel configured by a merchant; determining a payment type of the institutional member in the credit payment channel based on the payment configuration and credit data; sending a payment request for the commodity order to a payment platform upon determining that a payment condition in the payment type is triggered, to make a credit payment for the commodity order based on a credit account of the institutional member in the credit payment channel; and obtaining a to-be-settled bill generated by the payment platform based on a credit payment result, to perform fund settlement processing with the credit payment channel for the to-be-settled bill by using an institutional account of the institution.

One or more embodiments of this specification provide another credit-based transaction processing device, including: a processor; and a storage, configured to store computer-executable instructions. When the computer-executable instructions are executed, the processor is enabled to perform the following operations: receiving a payment request sent by a transaction platform for a commodity order after a payment condition in a payment type is triggered, where the payment type is determined based on a payment configuration of a credit payment channel configured by a merchant and credit data; making a credit payment for the commodity order based on a credit account of an institutional member of an institution in the credit payment channel in response to the payment request; and generating a to-be-settled bill based on a credit payment result, and returning the to-be-settled bill to the transaction platform, to perform fund settlement processing with the credit payment channel for the to-be-settled bill by using an institutional account of the institution.

One or more embodiments of this specification provide a storage medium, configured to store computer-executable instructions. When the computer-executable instructions are executed by a processor, the following procedure is implemented: querying, based on a credit payment channel selected by an institutional member of an institution for a commodity order, a payment configuration of the credit payment channel configured by a merchant; determining a payment type of the institutional member in the credit payment channel based on the payment configuration and credit data; sending a payment request for the commodity order to a payment platform upon determining that a payment condition in the payment type is triggered, to make a credit payment for the commodity order based on a credit account of the institutional member in the credit payment channel; and obtaining a to-be-settled bill generated by the payment platform based on a credit payment result, to perform fund settlement processing with the credit payment channel for the to-be-settled bill by using an institutional account of the institution.

One or more embodiments of this specification provide another storage medium, configured to store computer-executable instructions. When the computer-executable instructions are executed by a processor, the following procedure is implemented: receiving a payment request sent by a transaction platform for a commodity order after a payment condition in a payment type is triggered, where the payment type is determined based on a payment configuration of a credit payment channel configured by a merchant and credit data; making a credit payment for the commodity order based on a credit account of an institutional member of an institution in the credit payment channel in response to the payment request; and generating a to-be-settled bill based on a credit payment result, and returning the to-be-settled bill to the transaction platform, to perform fund settlement processing with the credit payment channel for the to-be-settled bill by using an institutional account of the institution.

### BRIEF DESCRIPTION OF DRAWINGS

To describe the technical solutions in one or more embodiments of this specification or in the conventional technology more clearly, the following briefly describes the accompanying drawings needed for describing the embodiments or the conventional technology. Clearly, the accompanying drawings in the following descriptions merely show some embodiments of this specification, and a person of ordinary skill in the art can still derive other drawings from these accompanying drawings without creative efforts.
FIG. 1 is a schematic diagram of an implementation environment of a credit-based transaction processing method according to one or more embodiments of this specification;
FIG. 2 is a processing flowchart of a credit-based transaction processing method according to one or more embodiments of this specification;
FIG. 3 is a processing timing diagram of a credit-based transaction processing method applied to an online transaction scenario according to one or more embodiments of this specification;
FIG. 4 is a processing flowchart of another credit-based transaction processing method according to one or more embodiments of this specification;
FIG. 5 is a schematic diagram of an embodiment of a credit-based transaction processing apparatus according to one or more embodiments of this specification;
FIG. 6 is a schematic diagram of an embodiment of another credit-based transaction processing apparatus according to one or more embodiments of this specification;
FIG. 7 is a schematic structural diagram of a credit-based transaction processing device according to one or more embodiments of this specification; and
FIG. 8 is a schematic structural diagram of another credit-based transaction processing device according to one or more embodiments of this specification.

### DESCRIPTION OF EMBODIMENTS

To make a person skilled in the art better understand the technical solutions in one or more embodiments of this specification, the following clearly and comprehensively describes the technical solutions in the one or more embodiments of this specification with reference to the accompanying drawings in the one or more embodiments of this specification. Clearly, the described embodiments are merely some but not all of the embodiments of this specification. All other embodiments obtained by a person of ordinary skill in the art based on the one or more embodiments of this specification without creative efforts shall fall within the protection scope of this specification.

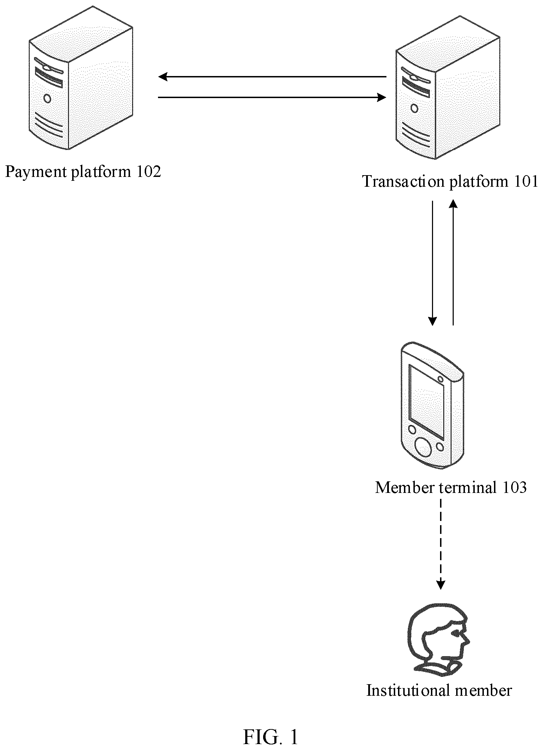

FIG. 1 is a schematic diagram of an implementation environment of a credit-based transaction processing method according to one or more embodiments of this specification.

The credit-based transaction processing method provided in one or more embodiments of this specification is applicable to an implementation environment in which a credit payment is made based on a credit payment channel selected by an institutional member of an institution for a commodity order. The implementation environment of the method includes at least a transaction platform 101. In addition, the implementation environment can further include a payment platform 102, and can further include a member terminal 103 of the institutional member.

The transaction platform 101 can be one server, a server cluster including several servers, or one or more cloud servers on a cloud computing platform. The transaction platform 101 is configured to: query, based on a credit payment channel selected by an institutional member, a payment configuration of the credit payment channel configured by a merchant, determine a payment type based on the payment configuration and credit data, send a payment request, and generate a to-be-settled bill.

The payment platform 102 can be one server, a server cluster including several servers, or one or more cloud servers on a cloud computing platform. The payment platform 102 is configured to: make a credit payment for a commodity order based on a credit account of an institutional member, and return a to-be-settled bill generated based on a credit payment result to the transaction platform 101.

The member terminal 103 can be a mobile phone, a personal computer, a tablet computer, an e-book reader, a virtual reality (VR)-based information exchange device, a vehicle-mounted terminal, an Internet of Things (IoT) device, a wearable intelligent device, a laptop portable computer, a desktop computer, etc.

In this implementation environment, the member terminal 103 obtains a credit payment channel selected by an institutional member of an institution for a commodity order, and sends the credit payment channel to the transaction platform 101. The transaction platform 101 receives the credit payment channel sent by the member terminal 103, queries, based on the credit payment channel, a payment configuration of the credit payment channel configured by a merchant, determines a payment type of the institutional member in the credit payment channel by using the payment configuration and credit data, sends a payment request for the commodity order to the payment platform 102 if a payment condition in the payment type is triggered, to make a credit payment for the commodity order based on a credit account of the institutional member in the credit payment channel, and obtains, on this basis, a to-be-settled bill generated by the payment platform 102 based on a credit payment result, to perform fund settlement processing with the credit payment channel for the to-be-settled bill by using an institutional account of the institution. Therefore, a credit payment is first performed for the commodity order based on the credit account of the institutional member, and then fund settlement is performed by using the institutional account of the institution, to relieve fund pressure on the institution. There is no need for the institution to reserve funds, and a case in which a payment failure of a commodity payment is caused due to insufficient funds in the institutional account and consequently consumption of the institutional member is affected can be effectively avoided. In addition, the credit data is introduced to improve payment security.

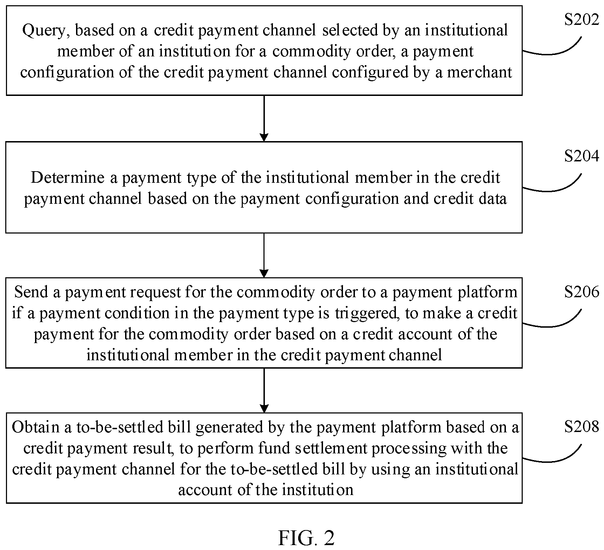

One or more embodiments of the credit-based transaction processing method provided in this specification are as follows:
With reference to FIG. 2, the credit-based transaction processing method provided in this embodiment can be applied to a transaction platform, and specifically includes step S202 to step S208.

Step S202: Query, based on a credit payment channel selected by an institutional member of an institution for a commodity order, a payment configuration of the credit payment channel configured by a merchant.

In this embodiment, the institution includes various forms of organizations, for example, an enterprise, a public institution, and a social group. In addition, the institution not only includes an organization at a current level, but also includes an internal organization of the institution, for example an enterprise department or a division. The institutional member includes institutional staff and related personnel.

The commodity order is a commodity order generated based on a commodity amount of a commodity and/or other commodity information (a commodity name, etc.). The credit payment channel is a channel in which a payment is made by using funds obtained through credit granting by a financial institution, a credit institution, etc., for example, a payment channel in which a payment is made by using a credit card of a financial institution A.

The payment configuration is a payment configuration configured by the merchant for making a payment by using the credit payment channel. The merchant can configure a payment configuration of one credit payment channel, or can configure payment configurations of different credit payment channels for different institutions. The payment configuration can include a credit interval (that is, a credit indicator interval) of an institution and/or a credit interval of an institutional member, a payment type corresponding to the credit interval, and a delayed payment time in a delayed payment type. For example, the payment configuration is "credit indicator (a1, a2], real-time payment type; credit indicator (a2, a3], delayed payment type, delayed for 5 days; credit indicator (a3, +∞], delayed payment type, delayed for 7 days". The credit indicator herein can be a credit indicator of the institution or a credit indicator of the institutional member. Alternatively, the payment configuration can include both a credit indicator of an institution and a credit indicator of an institutional member. For example, the payment configuration is "credit indicator (al, a2] of the institutional member, credit indicator (b1, b2] of the institution, real-time payment type; credit indicator (a2, a3] of the institutional member, credit indicator (b2, b3] of the institution, delayed payment type, delayed for 5 days; credit indicator (a3, +∞] of the institutional member, credit indicator (b3, +∞] of the institution, delayed payment type, delayed for 7 days".

The transaction platform is a platform that provides a commodity transaction to the institutional member. The transaction platform can be a business consumption platform. The payment platform includes a platform that provides a payment function, for example, a third-party payment platform or a third-party financial institution. In actual application, every two of the transaction platform, the institution, the payment platform, and the merchant can sign a transaction agreement, so that the merchant can provide a delayed payment service to the institution, the transaction platform can provide a commodity transaction service to the institution, and so on.

In specific implementation, the transaction platform can query, based on the credit payment channel selected by the institutional member of the institution for the commodity order, the payment configuration of the credit payment channel configured by the merchant. Specifically, the transaction platform can alternatively query, based on the credit payment channel selected by the institutional member of the institution for the commodity order, the payment configuration of the credit payment channel configured by the merchant for the institution, to improve payment flexibility of the institution by setting different payment configurations for different institutions.

In actual application, in a case, the institutional member of the institution can select a commodity by using the transaction platform, that is, select a commodity online. In view of this, in an optional implementation provided in this embodiment, before the step of querying, based on a credit payment channel selected by an institutional member of an institution for a commodity order, a payment configuration of the credit payment channel configured by a merchant is performed, the following operations are further performed:
creating a commodity order of a commodity based on the commodity selected by the institutional member from a commodity list, and delivering the commodity order to the institutional member; and
determining a credit payment channel selected by the institutional member from a payment channel list for the commodity order.

The payment channel list includes the credit payment channel, and the payment channel list further includes another payment channel.

In addition, in another case, the institutional member can select a commodity in a physical store of the merchant. Optionally, the commodity order is submitted after a code scanning device configured by the merchant scans an institution code that is of the institution and that is displayed on a member terminal of the institutional member. Optionally, the credit payment channel is selected after the commodity order is submitted based on the institution code of the institution.

The institution code of the institution is an identification code set by the institution for a payment by the institutional member, etc. The institution code can uniquely identify the institution. The institution code can exist in a form of an identification code, for example, a two-dimensional code, a barcode, or an audio code. The institutional member can implement a payment by using the institution code. In addition, the institution code can be further used for processing such as ticket issuance and reimbursement, and can be further used to identify a member identity of the institutional member in the institution. For example, the institution code is used as a digital work card of an enterprise employee, and the enterprise employee can collect, by using the institution code as a voucher, benefits and subsidies issued by the enterprise.

In addition, after step S202 is performed, it can be further verified whether a credit indicator corresponding to credit data is greater than a preset indicator threshold. If no, it is determined that the credit verification on the institutional member fails, and no processing is performed. If yes, it is determined that the credit verification on the institutional member succeeds, and the following step S204 of determining a payment type of the institutional member in the credit payment channel based on the payment configuration and the credit data is performed.

Alternatively, after step S202 is performed, it can be verified whether an institutional credit indicator corresponding to institutional credit data of the institution is greater than an institutional indicator threshold. If yes, it is determined that the credit verification on the institutional member succeeds, and the following step S204 is performed. If no, it is determined that the credit verification on the institutional member fails, and it is verified whether a member credit indicator corresponding to member credit data of the institutional member is greater than a member indicator threshold. If yes, it is determined that the credit verification on the institutional member succeeds, and the following step S204 is performed. If no, it is determined that the credit verification on the institutional member fails, and no processing is performed.

Alternatively, after step S202 is performed, it can be verified whether a member credit indicator corresponding to member credit data of the institutional member is greater than a member indicator threshold. If yes, it is determined that the credit verification on the institutional member succeeds, and the following step S204 is performed. If no, it is determined that the credit verification on the institutional member fails, and it is verified whether an institutional credit indicator corresponding to institutional credit data of the institution is greater than an institutional indicator threshold. If yes, it is determined that the credit verification on the institutional member succeeds, and the following step S204 is performed. If no, it is determined that the credit verification on the institutional member fails, and no processing is performed.

Alternatively, after step S202 is performed, it can be verified whether a member credit indicator corresponding to member credit data of the institutional member is greater than a member indicator threshold and an institutional credit indicator corresponding to institutional credit data of the institution is greater than an institutional indicator threshold. If yes, it is determined that the credit verification succeeds, and the following step S204 is performed. If no, it is determined that the credit verification fails, and no processing is performed.

It should be added that step S202 can be replaced with the step of querying, based on a credit payment channel selected by an institutional member of an institution for a commodity order, a payment configuration of the credit payment channel configured by a merchant for the institution, and form a new implementation with another processing step provided in this embodiment.

Step S204: Determine a payment type of the institutional member in the credit payment channel based on the payment configuration and credit data.

The payment configuration of the credit payment channel configured by the merchant is queried based on the credit payment channel selected by the institutional member of the institution for the commodity order. In this step, the payment type of the institutional member in the credit payment channel is determined by using the payment configuration of the credit payment channel and the credit data. In this embodiment, the credit data is credit-related data, and the credit data can be a credit indicator, for example, a credit score. The credit data can alternatively be credit-related behavior data, for example, borrowing data and repayment data. The credit data includes the institutional credit data of the institution and/or the member credit data of the institutional member. The payment type includes a real-time payment type and/or a delayed payment type. The real-time payment type is a type for making a real-time payment for the commodity order, and the delayed payment type is a type for making a delayed payment for the commodity order.

In actual application, in a process of making an order payment for the commodity order, the institutional member has a delayed payment requirement. The fund pressure can be effectively relieved through a delayed payment. To improve the security of the delayed payment and avoid causing fund losses to the merchant, the credit data can be introduced, and the payment type is determined by using the credit data and the payment configuration. In an optional implementation provided in this embodiment, in a process of determining the payment type of the institutional member in the credit payment channel based on the payment configuration and the credit data, the following operations are performed:
querying the institutional credit data of the institution or the member credit data of the institutional member, and determining a credit interval that matches the institutional credit data or the member credit data in the payment configuration; and
determining the payment type of the institutional member in the credit payment channel based on the credit interval.

The institutional credit data can be an institutional credit indicator of the institution, for example, an institutional credit score, that is, a credit score of the institution. The institutional credit data can alternatively be credit-related behavior data of the institution, for example, borrowing data of the institution and repayment data of the institution. The member credit data can be a member credit indicator of the institutional member, for example, a member credit score, that is, a credit score of the institutional member. The member credit data can alternatively be credit-related behavior data of the institutional member, for example, borrowing data of the institutional member and repayment data of the institutional member. The credit interval can be a credit indicator interval, for example, (a1, a2].

Specifically, the institutional credit indicator of the institution or the member credit indicator of the institutional member can be queried, a credit interval that matches the institutional credit indicator or the member credit indicator can be determined in the payment configuration, and a payment type corresponding to the credit interval in the payment configuration can be used as the payment type of the institutional member in the credit payment channel.

Alternatively, the institutional credit data of the institution or the member credit data of the institutional member can be queried, the institutional credit indicator of the institution can be calculated based on the institutional credit data or the member credit indicator of the institutional member can be calculated based on the member credit data, a credit interval that matches the institutional credit indicator or the member credit indicator can be determined in the payment configuration, and a payment type corresponding to the credit interval in the payment configuration can be used as the payment type of the institutional member in the credit payment channel.

In addition, in a process of determining the payment type of the institutional member in the credit payment channel based on the payment configuration and the credit data, the institutional credit data of the institution and the member credit data of the institutional member can be queried, and a first credit interval that matches the institutional credit data and a second credit interval that matches the member credit data are detected in the payment configuration. If a detection result of the first credit interval is null, a payment type corresponding to the second credit interval is used as the payment type of the institutional member in the credit payment channel. If a detection result of the second credit interval is null, a payment type corresponding to the first credit interval is used as the payment type of the institutional member in the credit payment channel. If the first credit interval and the second credit interval are the same, a payment type corresponding to the first credit interval or the second credit interval is used as the payment type of the institutional member in the credit payment channel. If the first credit interval and the second credit interval are different, a target payment type in a payment type corresponding to the first credit interval and a payment type corresponding to the second credit interval is used as the payment type of the institutional member in the credit payment channel. The target payment type is a payment type whose type level is a preset level in the payment type corresponding to the first credit interval and the payment type corresponding to the second credit interval. The preset level includes a higher level in two levels. For example, a level of a delayed payment type with a delay of 7 days is higher than a level of a delayed payment type with a delay of 5 days, and the level of the delayed payment type with a delay of 5 days is higher than a level of the real-time payment type, that is, a level of the delayed payment type is higher than the level of the real-time payment type. A delayed payment time in the delayed payment type is positively correlated with the level, that is, a longer delayed payment time indicates a higher level.

In addition, in a process of determining the payment type of the institutional member in the credit payment channel based on the payment configuration and the credit data, the institutional credit data of the institution in the credit payment channel and/or the member credit data of the institutional member in the credit payment channel can be queried by invoking a data interface, a credit interval that matches the institutional credit data and/or the member credit data is determined in the payment configuration, and the payment type of the institutional member in the credit payment channel is determined based on the credit interval. For example, if the credit payment channel is a credit card payment channel of the financial institution A, institutional credit data of the institution in the financial institution A and/or member credit data of the institutional member in the financial institution A are/is queried. Herein, a process of determining a credit interval that matches the institutional credit data and/or the member credit data in the payment configuration, and determining the payment type of the institutional member in the credit payment channel based on the credit interval is similar to the above-mentioned implementation process. Reference can be made for reading. Details are not described herein again.

In actual application, after the payment type of the institutional member in the credit payment channel is determined based on the payment configuration and the credit data, there may be different processing manners for the delayed payment type and the real-time payment type, to implement flexibility and pertinence of payment processing. When the payment type is the delayed payment type, the transaction platform can generate a delayed payment order and send the delayed payment order to the payment platform, receive a payment confirmation message returned by the payment platform, generate a transaction success reminder based on the payment confirmation message, and deliver the transaction success reminder to the institutional member. In this case, the institutional member actually does not pay for the commodity order, but applies for a delayed payment for the commodity order. However, in the case of the delayed payment type, although the institutional member does not pay for the commodity order, the merchant needs to provide a commodity or a service to the institutional member, to improve consumption experience of the institutional member. In a first optional implementation provided in this embodiment, after the payment type of the institutional member in the credit payment channel is determined based on the payment configuration and the credit data, the following operations are further performed:
generating a delayed payment order based on the commodity order and a delayed payment time, and sending the delayed payment order to the payment platform; and
receiving a payment confirmation message returned by the payment platform, generating a transaction success reminder based on the payment confirmation message, and delivering the transaction success reminder to the institutional member.

The delayed payment time is duration for which a delayed payment can be made for the commodity order. For example, if the delayed payment time is t, no payment can be made for the commodity order within t, and a payment is made for the commodity order after t expires. The delayed payment order includes an order for which a delayed payment is made. The payment confirmation message is a confirmation message for confirming the delayed payment. The transaction success reminder is a reminder indicating that the transaction is successful. Optionally, the delayed payment time is obtained by performing matching in the payment configuration based on the credit data.

Correspondingly, the payment platform can perform the following operations:
receiving the delayed payment order generated by the transaction platform based on the commodity order and the delayed payment time; and
storing the delayed payment order, generating the payment confirmation message, and returning the payment confirmation message to the transaction platform.

Specifically, if the payment type is the delayed payment type, the transaction platform can generate the delayed payment order based on the commodity order and the delayed payment time, and send the delayed payment order to the payment platform; the payment platform can receive the delayed payment order generated by the transaction platform based on the commodity order and the delayed payment time, store the delayed payment order, generate the payment confirmation message, and return the payment confirmation message to the transaction platform; and the transaction platform receives the payment confirmation message returned by the payment platform, generates the transaction success reminder based on the payment confirmation message, and delivers the transaction success reminder to the institutional member.

It should be added that before the delayed payment order is generated based on the commodity order and the delayed payment time and sent to the payment platform, the delayed payment time can be further determined in the payment configuration based on the credit data when the payment type is the delayed payment type.

In a process of generating the delayed payment order based on the commodity order and the delayed payment time, the delayed payment order can be generated based on an order identifier of the commodity order and the delayed payment time, to improve convenience of generating the delayed payment order, avoid, by using the order identifier, tampering with the delayed payment order in a transfer process, and improve data security of the delayed payment order. The order identifier can be an order identity document (ID).

In addition, before generating the delayed payment order based on the commodity order and the delayed payment time, and sending the delayed payment order to the payment platform, the transaction platform can further perform the following operations:
querying whether the merchant grants delayed payment permission for the institution; and
if yes, performing the operation of generating a delayed payment order based on the commodity order and a delayed payment time, and sending the delayed payment order to the payment platform; or
if no, performing no processing.

The delayed payment permission is permission for making a delayed payment.

On the basis of the above-mentioned first optional implementation, in an optional implementation provided in this embodiment, after the payment confirmation message returned by the payment platform is received, the transaction success reminder is generated based on the payment confirmation message, and the transaction success reminder is delivered to the institutional member, the following operations are further performed:
detecting whether the delayed payment time expires; and
if yes, determining that a payment condition in the delayed payment type is triggered; or
if no, determining that a payment condition in the delayed payment type is not triggered.

For example, the delayed payment time is 5 days. When it is detected that 5 days expires, it is determined that the payment condition in the delayed payment type is triggered.

In addition, after the payment type of the institutional member in the credit payment channel is determined based on the payment configuration and the credit data, when the payment type is the real-time payment type, it indicates that the member credit data of the institutional member and/or the institutional credit data of the institution do/does not meet a delayed payment condition of the merchant. To avoid fund losses to the merchant, the institutional member makes a real-time payment for the commodity order. In a second optional implementation provided in this embodiment, after the payment type of the institutional member in the credit payment channel is determined based on the payment configuration and the credit data, the following operations are further performed:
generating a real-time payment reminder, and delivering the real-time payment reminder to the institutional member; and
when a payment instruction submitted after the institutional member triggers the real-time payment reminder is detected, determining that a payment condition in the real-time payment type is triggered.

The real-time payment reminder is a reminder used to remind the institutional member to make a real-time payment for the commodity order. The real-time payment reminder can include an order amount and a transaction party recorded in the commodity order, and the real-time payment reminder can further include other types of information.

Specifically, if the payment type is the real-time payment type, the transaction platform can generate the real-time payment reminder based on the commodity order, and deliver the real-time payment reminder to the institutional member; and when the payment instruction submitted after the institutional member triggers the real-time payment reminder is detected, determine that the payment condition in the real-time payment type is triggered.

Step S206: Send a payment request for the commodity order to the payment platform if a payment condition in the payment type is triggered, to make a credit payment for the commodity order based on a credit account of the institutional member in the credit payment channel.

The transaction platform determines the payment type of the institutional member in the credit payment channel based on the payment configuration and the credit data. In this step, if the payment condition in the payment type is triggered, the payment request for the commodity order is sent to the payment platform, to make a credit payment for the commodity order on the payment platform based on the credit account of the institutional member in the credit payment channel. If the payment condition in the payment type is not triggered, no processing is performed.

In this embodiment, the payment condition includes the payment condition in the delayed payment type and/or the payment condition in the real-time payment type. Optionally, the payment condition includes that the delayed payment time of the institutional member expires or the payment instruction submitted by the institutional member is detected. The credit account of the institutional member in the credit payment channel includes a fund account of the institutional member in the credit payment channel, for example, a credit card account of the institutional member in the credit card payment channel of the financial institution A, that is, a credit account of the institutional member. In addition, the credit account of the institutional member in the credit payment channel can further include a credit account allocated by the institution to the institutional member in the credit payment channel, that is, the credit account belongs to the institution, but the institution can allocate the credit account to the institutional member to make a commodity payment.

In specific implementation, if the payment condition in the payment type is triggered, the transaction platform sends the payment request for the commodity order to the payment platform, to make a credit payment for the commodity order on the payment platform based on the credit account of the institutional member in the credit payment channel. Specifically, if the payment condition in the delayed payment type is triggered, a payment request for the delayed payment order is sent to the payment platform, to make a credit payment for the delayed payment order based on the credit account of the institutional member in the credit payment channel. If the payment condition in the real-time payment type is triggered, a payment request for the commodity order is sent to the payment platform, to make a credit payment for the commodity order based on the credit account of the institutional member in the credit payment channel. Correspondingly, the payment platform receives the payment request sent by the transaction platform for the commodity order or the delayed payment order after the payment condition in the payment type is triggered, makes a credit payment for the commodity order or the delayed payment order based on the credit account of the institutional member of the institution in the credit payment channel in response to the payment request, generates a to-be-settled bill based on a credit payment result, and returns the to-be-settled bill to the transaction platform.

In a process of making a credit payment for the commodity order or the delayed payment order based on the credit account of the institutional member in the credit payment channel, funds can be transferred out from the credit account based on the order amount in the commodity order or an order amount in the delayed payment order, and the transferred-out funds can be transferred to a merchant account of the merchant.

In addition, step S206 can be replaced with the following step of sending a payment request for the commodity order or the delayed payment order to the payment platform if the payment condition in the payment type is triggered, so that the payment platform performs payment processing on the commodity order or the delayed payment order based on an institutional account of the institution and a credit account of the institutional member in the credit payment channel. Specifically, in a process of performing payment processing on the commodity order or the delayed payment order based on the institutional account of the institution and the credit account of the institutional member in the credit payment channel, payment processing for a payment ratio can be performed on the commodity order or the delayed payment order by using the institutional account of the institution based on the payment ratio, and a credit payment for a remaining payment ratio can be made for the commodity order or the delayed payment order by using the credit account of the institutional member in the credit payment channel. The payment ratio is a ratio of payments made by using the institutional account, for example, 50%. A sum of the payment ratio and the remaining payment ratio can be 1.

On this basis, the payment platform generates a to-be-settled bill based on a credit payment result and a fund repayment period, and returns the to-be-settled bill to the transaction platform, to perform fund settlement processing with the credit payment channel for the to-be-settled bill by using the institutional account of the institution. A payment amount corresponding to the remaining payment ratio is recorded in the to-be-settled bill.

Step S208: Obtain the to-be-settled bill generated by the payment platform based on the credit payment result, to perform fund settlement processing with the credit payment channel for the to-be-settled bill by using the institutional account of the institution.

If the payment condition in the payment type is triggered, the transaction platform sends the payment request for the commodity order to the payment platform, to make a credit payment for the commodity order based on the credit account of the institutional member in the credit payment channel. In this step, the transaction platform obtains the to-be-settled bill generated by the payment platform based on the credit payment result, to perform fund settlement processing with the credit payment channel for the to-be-settled bill by using the institutional account of the institution.

In this embodiment, the credit payment result is a credit payment result obtained by making a credit payment for the commodity order. A bill amount is recorded in the to-be-settled bill, and the bill amount is the same as the order amount in the commodity order.

In specific implementation, the payment platform makes a credit payment for the commodity order or the delayed payment order based on the credit account of the institutional member of the institution in the credit payment channel, generates the to-be-settled bill based on the credit payment result, and returns the to-be-settled bill to the transaction platform; and the transaction platform obtains the to-be-settled bill generated by the payment platform based on the credit payment result, to perform fund settlement processing with the credit payment channel for the to-be-settled bill by using the institutional account of the institution.

In actual application, after the institutional member pays for the commodity order or the delayed payment order based on the credit payment channel, the to-be-settled bill of the institutional member is generated. In this case, the institution has a settlement requirement to help the institutional member settle the to-be-settled bill, that is, the institution needs to help the institutional member make a repayment. In view of this, to improve settlement convenience of the to-be-settled bill, in an optional implementation provided in this embodiment, in a process of performing fund settlement processing with the credit payment channel for the to-be-settled bill by using the institutional account of the institution, the following operations are performed:
obtaining a settlement request submitted by the institution for the to-be-settled bill; and
in response to the settlement request, transferring out funds from the institutional account based on the bill amount in the to-be-settled bill, and transferring the transferred-out funds to the credit account.

In addition, there is a case in which the to-be-settled bill is overdue. In this case, in a process of performing fund settlement processing with the credit payment channel for the to-be-settled bill by using the institutional account of the institution, the following operations are performed: obtaining a settlement request submitted by the institution for the to-be-settled bill; and in response to the settlement request, calculating an actual repayment amount of the to-be-settled bill based on the bill amount, the fund repayment period, and a calculation time in the to-be-settled bill, transferring out funds from the institutional account based on the actual repayment amount, and transferring the transferred-out funds to the credit account.

In an actual application scenario, the institution can further perform settlement processing on to-be-settled bills of institutional members in batches, to improve convenience and efficiency of settlement processing. In an optional implementation provided in this embodiment, after the to-be-settled bill generated by the payment platform based on the credit payment result is obtained, to perform fund settlement processing with the credit payment channel for the to-be-settled bill by using the institutional account of the institution, the following operations are further performed:
returning a to-be-settled bill list of the institutional member to the institution based on a bill query request submitted by the institution;
determining a target bill selected by the institution from the to-be-settled bill list, and sending the target bill to the payment platform; and
sending a settlement request to the payment platform based on a settlement instruction submitted by the institution for a settlement amount returned by the payment platform, to perform settlement processing on the target bill.

The to-be-settled bill list includes one or more to-be-settled bills. The one or more to-be-settled bills can belong to a same institutional member or can belong to different institutional members. There can be one or more target bills. The settlement amount is an amount to be paid or settled by the institution.

In specific implementation, the target bill may include a to-be-settled bill that is not settled before a fund repayment time. In this case, the settlement amount for the target bill includes not only the bill amount but also an overdue amount. In an optional implementation provided in this embodiment, after receiving the target bill, the payment platform performs the following operations:
detecting whether a fund repayment period recorded in the target bill expires; and
if no, returning a bill amount recorded in the target bill to the transaction platform as the settlement amount.

The fund repayment period is a period for performing bill settlement on the target bill. The fund repayment period can be an interest-free period, that is, within the interest-free period, the target bill incurs no overdue amount, and after the interest-free period expires, the target bill incurs the overdue amount.

In an optional implementation provided in this embodiment, if an execution result obtained after the operation of detecting whether a fund repayment period recorded in the target bill expires is performed is yes, the following operations are performed:
calculating an actual repayment amount of the target bill based on the bill amount, the fund repayment period, and a calculation time in the target bill; and
returning the actual repayment amount to the transaction platform as the settlement amount.

The detection time is a current time, that is, a current time for calculating the actual repayment amount.

Specifically, overdue duration can be calculated based on the fund repayment period and the calculation time, the actual repayment amount of the target bill is calculated based on the bill amount and the overdue duration, and the actual repayment amount is returned to the transaction platform as the settlement amount.

In actual application, the institution may not settle the to-be-settled bill within a specified time. In view of this, the institutional member can independently settle the to-be-settled bill, to avoid an overdue problem caused because the to-be-settled bill is not settled in a timely manner. After the institutional member independently settles the to-be-settled bill, a to-be-repaid bill can be generated to recover funds from the institution. In an optional implementation provided in this embodiment, after the to-be-settled bill generated by the payment platform based on the credit payment result is obtained, to perform fund settlement processing with the credit payment channel for the to-be-settled bill by using the institutional account of the institution, the following operations are further performed:
generating a fund repayment reminder based on the to-be-settled bill, and delivering the fund repayment reminder to the institutional member;
transferring funds from a member account of the institutional member to the credit account based on a fund repayment instruction of the institutional member for the to-be-settled bill; and
generating a to-be-repaid bill based on a fund transfer result and the to-be-settled bill, and delivering the to-be-repaid bill to the institution.

The to-be-repaid bill is a bill for which the institution needs to repay funds to the institutional member.

Specifically, after it is detected that a time span between the fund repayment time in the to-be-settled bill and the detection time is less than a preset span threshold, a fund repayment reminder can be generated based on the to-be-settled bill and the time span and delivered to the institutional member, funds are transferred from the member account of the institutional member to the credit account based on the fund repayment instruction of the institutional member for the to-be-settled bill, and after the fund transfer succeeds, the to-be-repaid bill is generated based on the to-be-settled bill and delivered to the institution.

In conclusion, according to the one or more credit-based transaction processing methods provided in this embodiment, the transaction platform first queries, based on a credit payment channel selected by an institutional member of an institution for a commodity order, a payment configuration of the credit payment channel configured by a merchant, queries institutional credit data of the institution or member credit data of the institutional member, determines a credit interval that matches the institutional credit data or the member credit data in the payment configuration, and determines a payment type of the institutional member in the credit payment channel based on the credit interval; and then if the payment type is a delayed payment type, generates a delayed payment order based on the commodity order and a delayed payment time, sends the delayed payment order to the payment platform, receives a payment confirmation message returned by the payment platform, generates a transaction success reminder based on the payment confirmation message, sends the transaction success reminder to the institutional member, and after detecting that the delayed payment time of the institutional member expires, determines that a payment condition in the delayed payment type is triggered; or if the payment type is a real-time payment type, generates a real-time payment reminder, delivers the real-time payment reminder to the institutional member, and when detecting a payment instruction submitted after the institutional member triggers the real-time payment reminder, determines that a payment condition in the real-time payment type is triggered.

Finally, if a payment condition in the payment type is triggered, the transaction platform sends a payment request for the delayed payment order or the commodity order to the payment platform, to make a credit payment for the delayed payment order or the commodity order based on a credit account of the institutional member in the credit payment channel, and obtains a to-be-settled bill generated by the payment platform based on a credit payment result, to perform fund settlement processing with the credit payment channel for the to-be-settled bill by using an institutional account of the institutional member. Therefore, a credit payment is first performed for the commodity order based on the credit account of the institutional member, and then fund settlement is performed by using the institutional account of the institution, to relieve fund pressure on the institution. There is no need for the institution to reserve funds, and a case in which a payment failure of a commodity payment is caused due to insufficient funds in the institutional account and consequently consumption of the institutional member is affected can be effectively avoided. In addition, the credit data is introduced to improve payment security.

The credit-based transaction processing method provided in this embodiment can be applied to the transaction platform, and cooperates with a credit-based transaction processing method that can be applied to a payment platform and that is provided below. Therefore, for reading of this embodiment, refer to the credit-based transaction processing method that can be applied to the payment platform and that is provided below. Similarly, for reading of the following method embodiments, refer to corresponding content of this embodiment.

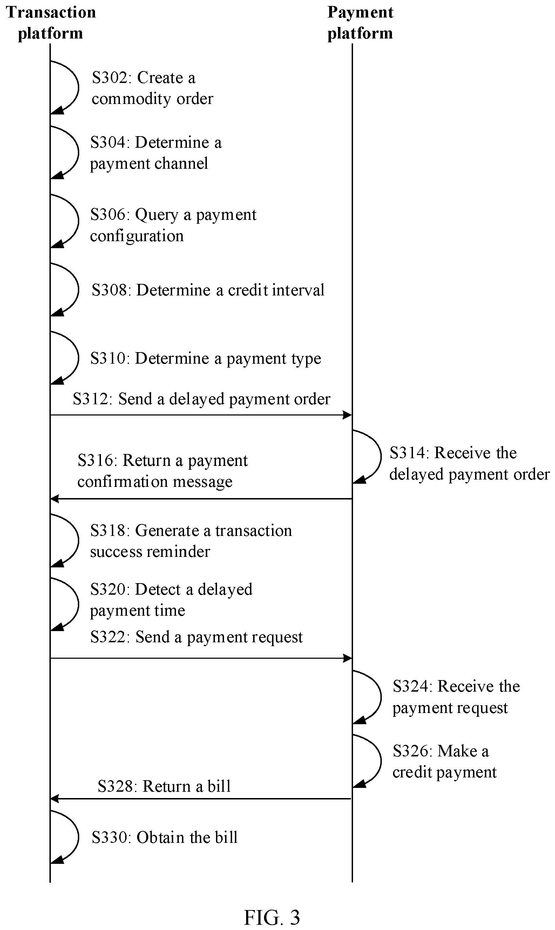

The credit-based transaction processing method provided in this embodiment is further described below by using an example in which the credit-based transaction processing method provided in this embodiment is applied to an online transaction scenario. With reference to FIG. 3, the credit-based transaction processing method applied to the online transaction scenario specifically includes the following steps.

Step S302: Create a commodity order of a commodity based on the commodity selected by an institutional member from a commodity list, and deliver the commodity order to the institutional member.

Step S304: Determine a credit payment channel selected by the institutional member from a payment channel list for the commodity order.

Step S306: Query, based on the credit payment channel selected by the institutional member of an institution for the commodity order, a payment configuration of the credit payment channel configured by a merchant.

Step S308: Query institutional credit data of the institution or member credit data of the institutional member, and determine a credit interval that matches the institutional credit data or the member credit data in the payment configuration.

Step S310: Determine a payment type of the institutional member in the credit payment channel based on the credit interval.

Step S312: If the payment type is a delayed payment type, generate a delayed payment order based on the commodity order and a delayed payment time, and send the delayed payment order to a payment platform.

Step S318: Receive a payment confirmation message returned by the payment platform, generate a transaction success reminder based on the payment confirmation message, and deliver the transaction success reminder to the institutional member.

Step S320: Detect whether the delayed payment time expires.

If no, no processing is performed.

If yes, it is determined that a payment condition in the delayed payment type is triggered, and the following steps S322 and S330 are performed.

Step S322: Send a payment request for the delayed payment order to the payment platform, to make a credit payment for the delayed payment order based on a credit account of the institutional member in the credit payment channel.

Step S330: Obtain a to-be-settled bill generated by the payment platform based on a credit payment result and a fund repayment period, to perform fund settlement processing with the credit payment channel for the to-be-settled bill by using an institutional account of the institution.

Optionally, the fund repayment period includes an interest-free period.

Step S302 to step S312, step S318 to step S322, and step S330 provided in this embodiment are performed by a transaction platform. It should be noted that a processing process of step S302 to step S312, step S318 to step S322, and step S330 performed by the transaction platform can cooperate, in an execution process, with a processing process of step S314, step S316, and step S324 to step S328 performed by the payment platform in the following embodiment. For reading of this embodiment, refer to corresponding content of step S314, step S316, and step S324 to step S328 performed by the payment platform in the following embodiment. For reading of the following embodiment, refer to corresponding content of step S302 to step S312, step S318 to step S322, and step S330 performed by the transaction platform in this embodiment.

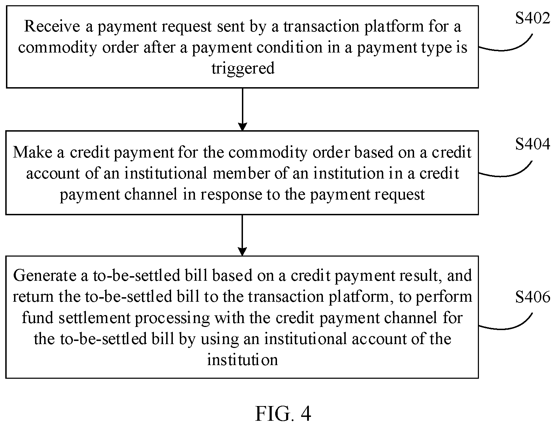

One or more embodiments of another credit-based transaction processing method provided in this specification are as follows:
With reference to FIG. 4, the credit-based transaction processing method provided in this embodiment can be applied to a payment platform, and specifically includes step S402 to step S406.

Step S402: Receive a payment request sent by a transaction platform for a commodity order after a payment condition in a payment type is triggered.

In this embodiment, the institution includes various forms of organizations, for example, an enterprise, a public institution, and a social group. In addition, the institution not only includes an organization at a current level, but also includes an internal organization of the institution, for example an enterprise department or a division. The institutional member includes institutional staff and related personnel. Optionally, the payment type is determined based on a payment configuration of a credit payment channel configured by a merchant and credit data.

The commodity order is a commodity order generated based on a commodity amount of a commodity and/or other commodity information (a commodity name, etc.). The credit payment channel is a channel in which a payment is made by using funds obtained through credit granting by a financial institution, etc., for example, a payment channel in which a payment is made by using a credit card.

The payment configuration is a payment configuration configured by the merchant for making a payment by using the credit payment channel. The merchant can configure a payment configuration of one credit payment channel, or can configure payment configurations of different credit payment channels for different institutions. The payment configuration can include a credit interval (that is, a credit indicator interval) of an institution and/or a credit interval of an institutional member, a payment type corresponding to the credit interval, and a delayed payment time in a delayed payment type. For example, the payment configuration is "credit indicator (a1, a2], real-time payment type; credit indicator (a2, a3], delayed payment type, delayed for 5 days; credit indicator (a3, +∞], delayed payment type, delayed for 7 days". The credit indicator herein can be a credit indicator of the institution or a credit indicator of the institutional member. Alternatively, the payment configuration can include both a credit indicator of an institution and a credit indicator of an institutional member. For example, the payment configuration is "credit indicator (a1, a2] of the institutional member, credit indicator (b1, b2] of the institution, real-time payment type; credit indicator (a2, a3] of the institutional member, credit indicator (b2, b3] of the institution, delayed payment type, delayed for 5 days; credit indicator (a3, +∞] of the institutional member, credit indicator (b3, +∞] of the institution, delayed payment type, delayed for 7 days".

In specific implementation, the transaction platform can query, based on the credit payment channel selected by the institutional member of the institution for the commodity order, the payment configuration of the credit payment channel configured by the merchant. Specifically, the transaction platform can alternatively query, based on the credit payment channel selected by the institutional member of the institution for the commodity order, the payment configuration of the credit payment channel configured by the merchant for the institution, to improve payment flexibility of the institution by setting different payment configurations for different institutions. The transaction platform can be a business consumption platform.

In actual application, in a case, the institutional member of the institution can select a commodity by using the transaction platform, that is, select a commodity online. In view of this, before the step of querying, based on a credit payment channel selected by an institutional member of an institution for a commodity order, a payment configuration of the credit payment channel configured by a merchant is performed, the following operations can be further performed:
creating a commodity order of a commodity based on the commodity selected by the institutional member from a commodity list, and delivering the commodity order to the institutional member; and
determining a credit payment channel selected by the institutional member from a payment channel list for the commodity order.

The payment channel list includes the credit payment channel, and the payment channel list further includes another payment channel.

In addition, in another case, the institutional member can select a commodity in a physical store of the merchant. Optionally, the commodity order is submitted after a code scanning device configured by the merchant scans an institution code that is of the institution and that is displayed on a member terminal of the institutional member. Optionally, the credit payment channel is selected after the commodity order is submitted based on the institution code of the institution.

The institution code of the institution is an identification code set by the institution for a payment by the institutional member, etc. The institution code can uniquely identify the institution. The institution code can exist in a form of an identification code, for example, a two-dimensional code, a barcode, or an audio code. The institutional member can implement a payment by using the institution code. In addition, the institution code can be further used for processing such as ticket issuance and reimbursement, and can be further used to identify a member identity of the institutional member in the institution. For example, the institution code is used as a digital work card of an enterprise employee, and the enterprise employee can collect, by using the institution code as a voucher, benefits and subsidies issued by the enterprise.

Optionally, the payment type is determined in the following manner:
querying, based on the credit payment channel selected by the institutional member of the institution for the commodity order, the payment configuration of the credit payment channel configured by the merchant; and
determining the payment type of the institutional member in the credit payment channel based on the payment configuration and the credit data.

The transaction platform queries, based on the credit payment channel selected by the institutional member of the institution for the commodity order, the payment configuration of the credit payment channel configured by the merchant. After this, the transaction platform determines the payment type of the institutional member in the credit payment channel by using the payment configuration of the credit payment channel and the credit data. The credit data is credit-related data, and the credit data can be a credit indicator, for example, a credit score. The credit data can alternatively be credit-related behavior data, for example, borrowing data and repayment data. The credit data includes institutional credit data of the institution and/or member credit data of the institutional member. The payment type includes a real-time payment type and/or a delayed payment type.

In actual application, in a process of making an order payment for the commodity order, the institutional member has a delayed payment requirement. The fund pressure can be effectively relieved through a delayed payment. To improve the security of the delayed payment and avoid causing fund losses to the merchant, the credit data can be introduced, and the payment type is determined by using the credit data and the payment configuration. Specifically, in a process of determining the payment type of the institutional member in the credit payment channel based on the payment configuration and the credit data, the transaction platform can perform the following operations:
querying the institutional credit data of the institution or the member credit data of the institutional member, and determining a credit interval that matches the institutional credit data or the member credit data in the payment configuration; and
determining the payment type of the institutional member in the credit payment channel based on the credit interval.

The institutional credit data can be an institutional credit indicator of the institution, for example, an institutional credit score, that is, a credit score of the institution. The institutional credit data can alternatively be credit-related behavior data of the institution, for example, borrowing data of the institution and repayment data of the institution. The member credit data can be a member credit indicator of the institutional member, for example, a member credit score, that is, a credit score of the institutional member. The member credit data can alternatively be credit-related behavior data of the institutional member, for example, borrowing data of the institutional member and repayment data of the institutional member. The credit interval can be a credit indicator interval, for example, (a1, a2].

Specifically, the transaction platform can query the institutional credit indicator of the institution or the member credit indicator of the institutional member, determine a credit interval that matches the institutional credit indicator or the member credit indicator in the payment configuration, and use a payment type corresponding to the credit interval in the payment configuration as the payment type of the institutional member in the credit payment channel.

Alternatively, the institutional credit data of the institution or the member credit data of the institutional member can be queried, the institutional credit indicator of the institution can be calculated based on the institutional credit data or the member credit indicator of the institutional member can be calculated based on the member credit data, a credit interval that matches the institutional credit indicator or the member credit indicator can be determined in the payment configuration, and a payment type corresponding to the credit interval in the payment configuration can be used as the payment type of the institutional member in the credit payment channel.

In addition, in a process of determining the payment type of the institutional member in the credit payment channel based on the payment configuration and the credit data, the transaction platform can query the institutional credit data of the institution and the member credit data of the institutional member, and detect a first credit interval that matches the institutional credit data and a second credit interval that matches the member credit data in the payment configuration. If a detection result of the first credit interval is null, a payment type corresponding to the second credit interval is used as the payment type of the institutional member in the credit payment channel. If a detection result of the second credit interval is null, a payment type corresponding to the first credit interval is used as the payment type of the institutional member in the credit payment channel. If the first credit interval and the second credit interval are the same, a payment type corresponding to the first credit interval or the second credit interval is used as the payment type of the institutional member in the credit payment channel. If the first credit interval and the second credit interval are different, a target payment type in a payment type corresponding to the first credit interval and a payment type corresponding to the second credit interval is used as the payment type of the institutional member in the credit payment channel. The target payment type is a payment type whose type level is a preset level in the payment type corresponding to the first credit interval and the payment type corresponding to the second credit interval. The preset level includes a higher level in two levels. For example, a level of a delayed payment type with a delay of 7 days is higher than a level of a delayed payment type with a delay of 5 days, and the level of the delayed payment type with a delay of 5 days is higher than a level of the real-time payment type.

In addition, in a process of determining the payment type of the institutional member in the credit payment channel based on the payment configuration and the credit data, the transaction platform can query the institutional credit data of the institution in the credit payment channel and/or the member credit data of the institutional member in the credit payment channel by invoking a data interface, determine a credit interval that matches the institutional credit data and/or the member credit data in the payment configuration, and determine the payment type of the institutional member in the credit payment channel based on the credit interval. For example, if the credit payment channel is a credit card payment channel, institutional credit data of the institution in a financial institution corresponding to the credit card and/or member credit data of the institutional member in the financial institution are/is queried. Herein, a process of determining a credit interval that matches the institutional credit data and/or the member credit data in the payment configuration, and determining the payment type of the institutional member in the credit payment channel based on the credit interval is similar to the above-mentioned implementation process. Reference can be made for reading. Details are not described herein again.

In actual application, after the transaction platform determines the payment type of the institutional member in the credit payment channel based on the payment configuration and the credit data, there may be different processing manners for the delayed payment type and the real-time payment type, to implement flexibility and pertinence of payment processing. When the payment type is the delayed payment type, the transaction platform can generate a delayed payment order and send the delayed payment order to the payment platform, receive a payment confirmation message returned by the payment platform, generate a transaction success reminder based on the payment confirmation message, and deliver the transaction success reminder to the institutional member. In this case, the institutional member actually does not pay for the commodity order, but applies for a delayed payment for the commodity order. However, in the case of the delayed payment type, although the institutional member does not pay for the commodity order, the merchant needs to provide a commodity or a service to the institutional member, to improve consumption experience of the institutional member. After the transaction platform determines the payment type of the institutional member in the credit payment channel based on the payment configuration and the credit data, the following operations can be further performed:
generating a delayed payment order based on the commodity order and a delayed payment time, and sending the delayed payment order to the payment platform; and
receiving a payment confirmation message returned by the payment platform, generating a transaction success reminder based on the payment confirmation message, and delivering the transaction success reminder to the institutional member.

The delayed payment time is duration for which a delayed payment can be made for the commodity order. For example, if the delayed payment time is t, no payment can be made for the commodity order within t, and a payment is made for the commodity order after t expires. The delayed payment order includes an order for which a delayed payment is made. The payment confirmation message is a delayed payment confirmation message. The transaction success reminder is a reminder indicating that the transaction is successful. Optionally, the delayed payment time is obtained by performing matching in the payment configuration based on the credit data.

Correspondingly, in an optional implementation provided in this embodiment, before receiving the payment request sent by the transaction platform for the commodity order after the payment condition in the payment type is triggered, the payment platform further performs the following operations:
receiving the delayed payment order generated by the transaction platform based on the commodity order and the delayed payment time; and
storing the delayed payment order, generating the payment confirmation message, and returning the payment confirmation message to the transaction platform.

Specifically, if the payment type is the delayed payment type, the transaction platform can generate the delayed payment order based on the commodity order and the delayed payment time, and send the delayed payment order to the payment platform; the payment platform can receive the delayed payment order generated by the transaction platform based on the commodity order and the delayed payment time, store the delayed payment order, generate the payment confirmation message, and return the payment confirmation message to the transaction platform; and the transaction platform receives the payment confirmation message returned by the payment platform, generates the transaction success reminder based on the payment confirmation message, and delivers the transaction success reminder to the institutional member.

In a process of generating the delayed payment order based on the commodity order and the delayed payment time, the transaction platform can generate the delayed payment order based on an order identifier of the commodity order and the delayed payment time, to improve convenience of generating the delayed payment order, avoid, by using the order identifier, tampering with the delayed payment order in a transfer process, and improve data security of the delayed payment order. The order identifier can be a commodity order identity document (ID).

In addition, before generating the delayed payment order based on the commodity order and the delayed payment time, and sending the delayed payment order to the payment platform, the transaction platform can further perform the following operations:
querying whether the merchant grants delayed payment permission for the institution; and
if yes, generating the delayed payment order based on the commodity order and the delayed payment time, and sending the delayed payment order to the payment platform; or
if no, performing no processing.

The delayed payment permission is permission for making a delayed payment.

In addition, after the transaction platform determines the payment type of the institutional member in the credit payment channel based on the payment configuration and the credit data, when the payment type is the real-time payment type, it indicates that the member credit data of the institutional member and/or the institutional credit data of the institution do/does not meet a delayed payment condition of the merchant. To avoid fund losses to the merchant, the institutional member makes a real-time payment for the commodity order. Specifically, after determining the payment type of the institutional member in the credit payment channel based on the payment configuration and the credit data, the transaction platform can further perform the following operations:
generating a real-time payment reminder, and delivering the real-time payment reminder to the institutional member; and
when a payment instruction submitted after the institutional member triggers the real-time payment reminder is detected, determining that a payment condition in the real-time payment type is triggered.

The real-time payment reminder is a reminder used to remind the institutional member to make a real-time payment for the commodity order. The real-time payment reminder can include an order amount and a transaction party recorded in the commodity order, and the real-time payment reminder can further include other types of information.

Step S404: Make a credit payment for the commodity order based on a credit account of the institutional member of the institution in the credit payment channel in response to the payment request.

The transaction platform determines the payment type of the institutional member in the credit payment channel based on the payment configuration and the credit data. After this, if the payment condition in the payment type is triggered, the transaction platform sends the payment request for the commodity order to the payment platform, to make a credit payment for the commodity order on the payment platform based on the credit account of the institutional member in the credit payment channel. If the payment condition in the payment type is not triggered, no processing is performed. Correspondingly, the payment platform receives the payment request sent by the transaction platform for the commodity order after the payment condition in the payment type is triggered, and makes a credit payment for the commodity order based on the credit account of the institutional member of the institution in the credit payment channel in response to the payment request.

In this embodiment, the payment condition includes a payment condition in the delayed payment type and/or a payment condition in the real-time payment type. Optionally, the payment condition includes that the delayed payment time of the institutional member expires or the payment instruction submitted by the institutional member is detected.

In specific implementation, if the payment condition in the payment type is triggered, the transaction platform sends the payment request for the commodity order to the payment platform, to make a credit payment for the commodity order on the payment platform based on the credit account of the institutional member in the credit payment channel. Specifically, if the payment condition in the delayed payment type is triggered, the transaction platform sends a payment request for the delayed payment order to the payment platform, to make a credit payment for the delayed payment order based on the credit account of the institutional member in the credit payment channel. If the payment condition in the real-time payment type is triggered, the transaction platform sends a payment request for the commodity order to the payment platform, to make a credit payment for the commodity order based on the credit account of the institutional member in the credit payment channel. Correspondingly, the payment platform receives the payment request sent by the transaction platform for the commodity order or the delayed payment order after the payment condition in the payment type is triggered, makes a credit payment for the commodity order or the delayed payment order based on the credit account of the institutional member of the institution in the credit payment channel in response to the payment request, generates a to-be-settled bill based on a credit payment result, and returns the to-be-settled bill to the transaction platform.

In specific implementation, in an optional implementation provided in this embodiment, in a process of making a credit payment for the commodity order based on the credit account of the institutional member of the institution in the credit payment channel, the following operation is performed:
transferring out funds from the credit account based on an order amount in the commodity order, and transferring the transferred-out funds to a merchant account of the merchant.

In addition, the transaction platform sends a payment request for the commodity order or the delayed payment order to the payment platform if the payment condition in the payment type is triggered, so that the payment platform performs payment processing on the commodity order or the delayed payment order based on an institutional account of the institution and a credit account of the institutional member in the credit payment channel. Specifically, in a process of performing payment processing on the commodity order or the delayed payment order based on the institutional account of the institution and the credit account of the institutional member in the credit payment channel, payment processing for a payment ratio can be performed on the commodity order or the delayed payment order by using the institutional account of the institution based on the payment ratio, and a credit payment for a remaining payment ratio can be made for the commodity order or the delayed payment order by using the credit account of the institutional member in the credit payment channel. The payment ratio is a ratio of payments made by using the institutional account, for example, 50%. A sum of the payment ratio and the remaining payment ratio can be 1.

Step S406: Generate the to-be-settled bill based on the credit payment result, and return the to-be-settled bill to the transaction platform, to perform fund settlement processing with the credit payment channel for the to-be-settled bill by using the institutional account of the institution.

If the payment condition in the payment type is triggered, the transaction platform sends the payment request for the commodity order to the payment platform, to make a credit payment for the commodity order based on the credit account of the institutional member in the credit payment channel. Correspondingly, the payment platform makes a credit payment for the commodity order based on the credit account of the institutional member of the institution in the credit payment channel, generates the to-be-settled bill based on the credit payment result, and returns the to-be-settled bill to the transaction platform. The transaction platform obtains the to-be-settled bill generated by the payment platform based on the credit payment result, to perform fund settlement processing with the credit payment channel for the to-be-settled bill by using the institutional account of the institution.

In this embodiment, the credit payment result is a credit payment result obtained by making a credit payment for the commodity order. A bill amount is recorded in the to-be-settled bill, and the bill amount is the same as the order amount in the commodity order.

In specific implementation, the payment platform makes a credit payment for the commodity order or the delayed payment order based on the credit account of the institutional member of the institution in the credit payment channel, generates the to-be-settled bill based on the credit payment result, and returns the to-be-settled bill to the transaction platform; and the transaction platform obtains the to-be-settled bill generated by the payment platform based on the credit payment result, to perform fund settlement processing with the credit payment channel for the to-be-settled bill by using the institutional account of the institution.

In actual application, after the institutional member pays for the commodity order or the delayed payment order based on the credit payment channel, the to-be-settled bill of the institutional member is generated. In this case, the institution has a settlement requirement to help the institutional member settle the to-be-settled bill, that is, the institution needs to help the institutional member make a repayment. In view of this, to improve settlement convenience of the to-be-settled bill, in an optional implementation provided in this embodiment, after the to-be-settled bill is generated based on the credit payment result and returned to the transaction platform, to perform fund settlement processing with the credit payment channel for the to-be-settled bill by using the institutional account of the institution, the following operations are further performed:
receiving a target bill that is sent by the transaction platform and that is selected by the institution from a to-be-settled bill list of the institutional member;
detecting whether a fund repayment period recorded in the target bill expires; and
if no, returning a bill amount recorded in the target bill to the transaction platform as a settlement amount.

In an optional implementation provided in this embodiment, if an execution result obtained after the operation of detecting whether a fund repayment period recorded in the target bill expires is performed is yes, the following operations are performed:
calculating an actual repayment amount of the target bill based on the bill amount, the fund repayment period, and a calculation time in the target bill; and
returning the actual repayment amount to the transaction platform as the settlement amount.

The to-be-settled bill list includes one or more to-be-settled bills. The one or more to-be-settled bills can belong to a same institutional member or can belong to different institutional members. There can be one or more target bills.

The detection time is a current time, that is, a current time for calculating the actual repayment amount.

Specifically, overdue duration can be calculated based on the fund repayment period and the calculation time, the actual repayment amount of the target bill is calculated based on the bill amount and the overdue duration, and the actual repayment amount is returned to the transaction platform as the settlement amount.

In actual application, the institution may not settle the to-be-settled bill within a specified time. In view of this, the institutional member can independently settle the to-be-settled bill, to avoid an overdue problem caused because the to-be-settled bill is not settled in a timely manner. In an optional implementation provided in this embodiment, after the to-be-settled bill generated by the payment platform based on the credit payment result is obtained, to perform fund settlement processing with the credit payment channel for the to-be-settled bill by using the institutional account of the institution, the following operations are further performed:
generating a fund repayment reminder based on the to-be-settled bill, and delivering the fund repayment reminder to the institutional member;
transferring funds from a member account of the institutional member to the credit account based on a fund repayment instruction of the institutional member for the to-be-settled bill; and
generating a to-be-repaid bill based on a fund transfer result and the to-be-settled bill, and delivering the to-be-repaid bill to the institution.

The credit-based transaction processing method provided in this embodiment is further described below by using an example in which the credit-based transaction processing method provided in this embodiment is applied to an online transaction scenario. With reference to FIG. 3, the credit-based transaction processing method applied to the online transaction scenario specifically includes the following steps.

Step S314: Receive a delayed payment order generated by a transaction platform based on a commodity order and a delayed payment time.

Step S316: Store the delayed payment order, generate a payment confirmation message, and return the payment confirmation message to the transaction platform.

Step S324: Receive a payment request sent by the transaction platform for the delayed payment order after a payment condition in a delayed payment type is triggered.

Step S326: Make a credit payment for the delayed payment order based on a credit account of an institutional member of an institution in a credit payment channel in response to the payment request.

Step S328: Generate a to-be-settled bill based on a credit payment result and a fund repayment period, and return the to-be-settled bill to the transaction platform.

An embodiment of a credit-based transaction processing apparatus provided in this specification is as follows:
In the above-mentioned embodiment, a credit-based transaction processing method applied to a transaction platform is provided. Correspondingly, a credit-based transaction processing apparatus running on a transaction platform is further provided. The following provides descriptions with reference to the accompanying drawings.

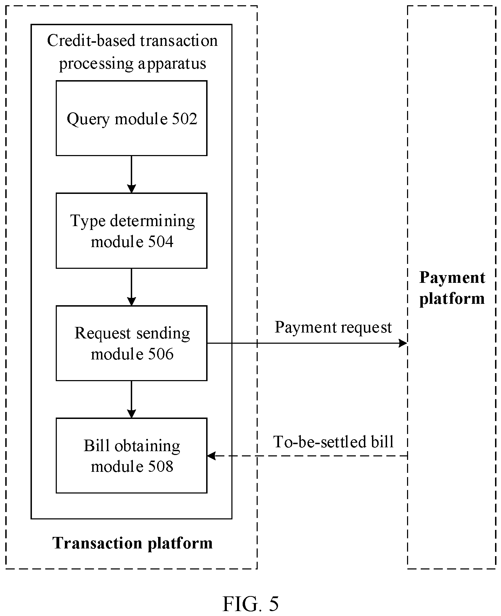

FIG. 5 is a schematic diagram of an embodiment of a credit-based transaction processing apparatus according to an embodiment.

The apparatus embodiment corresponds to the method embodiment, and therefore is briefly described. For a related part, refer to the corresponding descriptions of the method embodiment provided above. The apparatus embodiment described below is merely an example.

An embodiment provides a credit-based transaction processing apparatus, running on a transaction platform. The apparatus includes:
a query module 502, configured to query, based on a credit payment channel selected by an institutional member of an institution for a commodity order, a payment configuration of the credit payment channel configured by a merchant;
a type determining module 504, configured to determine a payment type of the institutional member in the credit payment channel based on the payment configuration and credit data;
a request sending module 506, configured to send a payment request for the commodity order to a payment platform if a payment condition in the payment type is triggered, to make a credit payment for the commodity order based on a credit account of the institutional member in the credit payment channel; and
a bill obtaining module 508, configured to obtain a to-be-settled bill generated by the payment platform based on a credit payment result, to perform fund settlement processing with the credit payment channel for the to-be-settled bill by using an institutional account of the institution.

An embodiment of another credit-based transaction processing apparatus provided in this specification is as follows:
In the above-mentioned embodiment, a credit-based transaction processing method applied to a payment platform is provided. Correspondingly, a credit-based transaction processing apparatus running on a payment platform is further provided. The following provides descriptions with reference to the accompanying drawings.

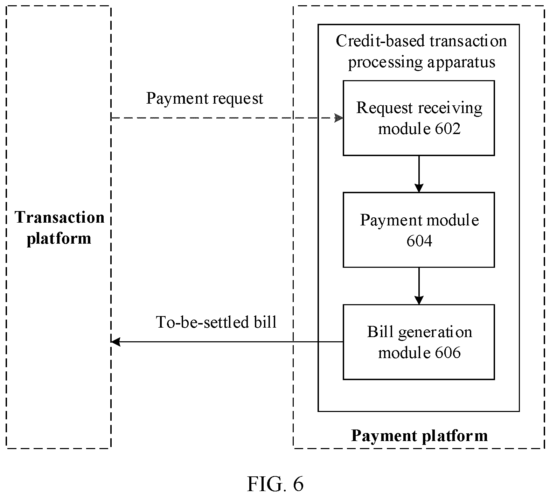

FIG. 6 is a schematic diagram of an embodiment of a credit-based transaction processing apparatus according to an embodiment.

The apparatus embodiment corresponds to the method embodiment, and therefore is briefly described. For a related part, refer to the corresponding descriptions of the method embodiment provided above. The apparatus embodiment described below is merely an example.

An embodiment provides a credit-based transaction processing apparatus, running on a payment platform. The apparatus includes:
a request receiving module 602, configured to receive a payment request sent by a transaction platform for a commodity order after a payment condition in a payment type is triggered, where the payment type is determined based on a payment configuration of a credit payment channel configured by a merchant and credit data;
a payment module 604, configured to make a credit payment for the commodity order based on a credit account of an institutional member of an institution in the credit payment channel in response to the payment request; and
a bill generation module 606, configured to: generate a to-be-settled bill based on a credit payment result, and return the to-be-settled bill to the transaction platform, to perform fund settlement processing with the credit payment channel for the to-be-settled bill by using an institutional account of the institution.

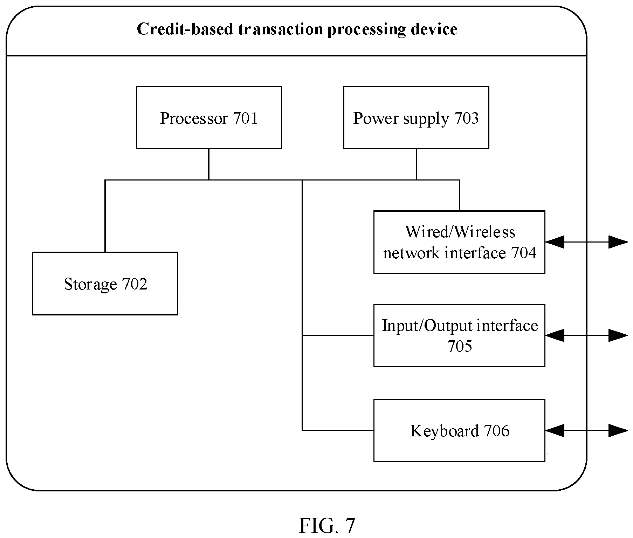

An embodiment of a credit-based transaction processing device provided in this specification is as follows:
Corresponding to the credit-based transaction processing method that is applied to a transaction platform and that is described above, based on the same technical concept, one or more embodiments of this specification further provide a credit-based transaction processing device. The credit-based transaction processing device is configured to perform the credit-based transaction processing method that is applied to a transaction platform and that is provided above. FIG. 7 is a schematic structural diagram of a credit-based transaction processing device according to one or more embodiments of this specification.

The credit-based transaction processing device provided in this embodiment includes the following.

As shown in FIG. 7, the credit-based transaction processing device can vary greatly because of a difference in configuration or performance, and can include one or more processors 701 and a storage 702. The storage 702 can store one or more storage application programs or data. The storage 702 can be a transient storage or a persistent storage. The application program stored in the storage 702 can include one or more modules (not shown in the figure), and each module can include a series of computer-executable instructions in the credit-based transaction processing device. Further, the processor 701 can be configured to: communicate with the storage 702, and execute a series of computer-executable instructions in the storage 702 in the credit-based transaction processing device. The credit-based transaction processing device can further include one or more power supplies 703, one or more wired or wireless network interfaces 704, one or more input/output interfaces 705, one or more keyboards 706, etc.

In a specific embodiment, the credit-based transaction processing device includes a storage and one or more programs. The one or more programs are stored in the storage, and the one or more programs can include one or more modules, and each module can include a series of computer-executable instructions in the credit-based transaction processing device. The one or more processors are configured to execute the computer-executable instructions included in the one or more programs to perform the following operations:
querying, based on a credit payment channel selected by an institutional member of an institution for a commodity order, a payment configuration of the credit payment channel configured by a merchant;
determining a payment type of the institutional member in the credit payment channel based on the payment configuration and credit data;
sending a payment request for the commodity order to a payment platform if a payment condition in the payment type is triggered, to make a credit payment for the commodity order based on a credit account of the institutional member in the credit payment channel; and
obtaining a to-be-settled bill generated by the payment platform based on a credit payment result, to perform fund settlement processing with the credit payment channel for the to-be-settled bill by using an institutional account of the institution.

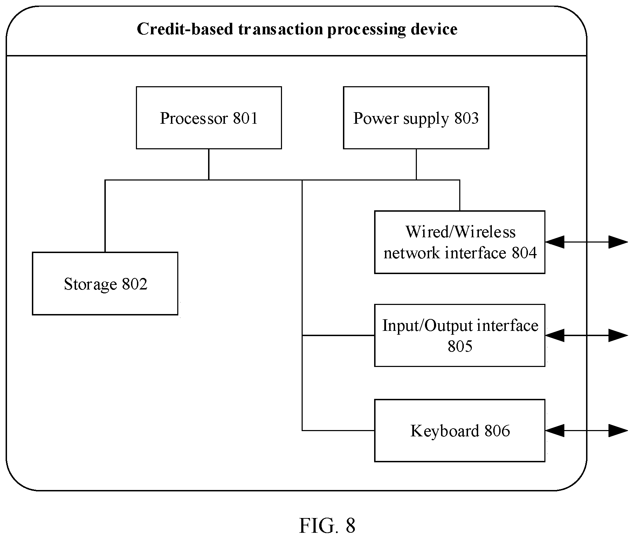

An embodiment of another credit-based transaction processing device provided in this specification is as follows:
Corresponding to the credit-based transaction processing method that is applied to a payment platform and that is described above, based on the same technical concept, one or more embodiments of this specification further provide a credit-based transaction processing device. The credit-based transaction processing device is configured to perform the credit-based transaction processing method that is applied to a payment platform and that is provided above. FIG. 8 is a schematic structural diagram of a credit-based transaction processing device according to one or more embodiments of this specification.

The credit-based transaction processing device provided in this embodiment includes the following.

As shown in FIG. 8, the credit-based transaction processing device can vary greatly because of a difference in configuration or performance, and can include one or more processors 801 and a storage 802. The storage 802 can store one or more storage application programs or data. The storage 802 can be a transient storage or a persistent storage. The application program stored in the storage 802 can include one or more modules (not shown in the figure), and each module can include a series of computer-executable instructions in the credit-based transaction processing device. Further, the processor 801 can be configured to: communicate with the storage 802, and execute a series of computer-executable instructions in the storage 802 in the credit-based transaction processing device. The credit-based transaction processing device can further include one or more power supplies 803, one or more wired or wireless network interfaces 804, one or more input/output interfaces 805, one or more keyboards 806, etc.

In a specific embodiment, the credit-based transaction processing device includes a storage and one or more programs. The one or more programs are stored in the storage, and the one or more programs can include one or more modules, and each module can include a series of computer-executable instructions in the credit-based transaction processing device. The one or more processors are configured to execute the computer-executable instructions included in the one or more programs to perform the following operations:
receiving a payment request sent by a transaction platform for a commodity order after a payment condition in a payment type is triggered, where the payment type is determined based on a payment configuration of a credit payment channel configured by a merchant and credit data;
making a credit payment for the commodity order based on a credit account of an institutional member of an institution in the credit payment channel in response to the payment request; and
generating a to-be-settled bill based on a credit payment result, and returning the to-be-settled bill to the transaction platform, to perform fund settlement processing with the credit payment channel for the to-be-settled bill by using an institutional account of the institution.

An embodiment of a storage medium provided in this specification is as follows:
Corresponding to the credit-based transaction processing method that is applied to a transaction platform and that is described above, based on the same technical concept, one or more embodiments of this specification further provide a storage medium.

The storage medium provided in this embodiment is configured to store computer-executable instructions. When the computer-executable instructions are executed by a processor, the following procedure is implemented:
querying, based on a credit payment channel selected by an institutional member of an institution for a commodity order, a payment configuration of the credit payment channel configured by a merchant;
determining a payment type of the institutional member in the credit payment channel based on the payment configuration and credit data;
sending a payment request for the commodity order to a payment platform if a payment condition in the payment type is triggered, to make a credit payment for the commodity order based on a credit account of the institutional member in the credit payment channel; and
obtaining a to-be-settled bill generated by the payment platform based on a credit payment result, to perform fund settlement processing with the credit payment channel for the to-be-settled bill by using an institutional account of the institution.

It should be noted that the embodiment of the storage medium in this specification and the embodiment of the credit-based transaction processing method applied to a transaction platform in this specification are based on the same invention concept. Therefore, for specific implementation of the embodiment, refer to the implementation of the above-mentioned corresponding method. Repeated parts are not described again.

An embodiment of another storage medium provided in this specification is as follows:
Corresponding to the credit-based transaction processing method that is applied to a payment platform and that is described above, based on the same technical concept, one or more embodiments of this specification further provide another storage medium.

The storage medium provided in this embodiment is configured to store computer-executable instructions. When the computer-executable instructions are executed by a processor, the following procedure is implemented:
receiving a payment request sent by a transaction platform for a commodity order after a payment condition in a payment type is triggered, where the payment type is determined based on a payment configuration of a credit payment channel configured by a merchant and credit data;
making a credit payment for the commodity order based on a credit account of an institutional member of an institution in the credit payment channel in response to the payment request; and
generating a to-be-settled bill based on a credit payment result, and returning the to-be-settled bill to the transaction platform, to perform fund settlement processing with the credit payment channel for the to-be-settled bill by using an institutional account of the institution.

It should be noted that the embodiment of the another storage medium in this specification and the embodiment of the credit-based transaction processing method applied to a payment platform in this specification are based on the same invention concept. Therefore, for specific implementation of the embodiment, refer to the implementation of the above-mentioned corresponding method. Repeated parts are not described again.

The embodiments of this specification are described in a progressive manner. For same or similar parts in the embodiments, refer to each other. Each embodiment focuses on a difference from other embodiments. For example, the apparatus embodiment, the device embodiment, and the storage medium embodiment are all similar to the method embodiment, and therefore are briefly described. For reading of related content in the apparatus embodiment, the device embodiment, and the storage medium embodiment, refer to some descriptions in the method embodiment.

Specific embodiments of this specification are described above. Other embodiments fall within the scope of the appended claims. In some cases, the actions or steps described in the claims can be performed in a sequence different from that in the embodiments and desired results can still be achieved. In addition, the process depicted in the accompanying drawings does not necessarily need a particular sequence or consecutive sequence to achieve the desired results. In some implementations, multi-tasking and concurrent processing are feasible or may be advantageous.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by a user through device programming. The designer performs programming to "integrate" a digital system to a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit that implements a logical method procedure can be readily obtained once the method procedure is logically programmed by using the several hardware description languages described above and is programmed into an integrated circuit.

A controller can be implemented in any suitable manner. For example, the controller can be in a form such as a microprocessor, a processor, or a computer-readable medium, a logic gate, a switch, an application-specific integrated circuit (ASIC), a programmable logic controller, or an embedded microcontroller storing computer-readable program code (such as software or firmware) that can be executed by the (micro)processor. Examples of the controller include but are not limited to the following microcontrollers: ARC 625D, Atmel AT91SAM, Microchip PIC18F26K20, and Silicone Labs C8051F320. A storage controller can also be implemented as a part of control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. Atypical implementation device is a computer. Specifically, for example, the computer can be a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, when the embodiments of this specification are implemented, functions of the units can be implemented in one or more pieces of software and/or hardware.

A person skilled in the art should understand that one or more embodiments of this specification can be provided as a method, a system, or a computer program product. Therefore, the one or more embodiments of this specification can use a form of hardware only embodiments, software only embodiments, or embodiments with a combination of software and hardware. In addition, this specification can use a form of a computer program product that is implemented on one or more computer-usable storage media (including but not limited to a disk storage, a CD-ROM, an optical storage, etc.) that include computer-usable program code.

This specification is described with reference to the flowcharts and/or block diagrams of the method, the device (system), and the computer program product according to the embodiments of this specification. It should be understood that each procedure and/or block in the flowcharts and/or the block diagrams and a combination of procedures and/or blocks in the flowcharts and/or the block diagrams can be implemented by using computer program instructions. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more procedures in the flowcharts and/or in one or more blocks in the block diagrams.

Alternatively, these computer program instructions can be stored in a computer-readable storage that can instruct a computer or another programmable data processing device to work in a specific manner, so the instructions stored in the computer-readable storage generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPUs), one or more input/output interfaces, one or more network interfaces, and one or more memories.

The memory can include a non-persistent memory, a random access memory (RAM), a nonvolatile memory, and/or another form in a computer-readable medium, for example, a read-only memory (ROM) or a flash memory (flash RAM). The memory is an example of the computer-readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a magnetic disk storage, or another magnetic storage device or any other non-transmission medium. The computer storage medium can be configured to store information that can be accessed by a computing device. As described in this specification, the computer-readable medium does not include computer-readable transitory media (transitory media) such as a modulated data signal and a carrier.

It should be further noted that the terms "include", "comprise", or any other variants thereof are intended to cover a non-exclusive inclusion, so that a process, a method, a product, or a device that includes a list of elements not only includes those elements but also includes other elements which are not expressly listed, or further includes elements inherent to such a process, method, product, or device. Without more constraints, an element preceded by "includes a ..." does not preclude the presence of additional identical elements in the process, method, product, or device that includes the element.

The one or more embodiments of this specification can be described in the general context of computer-executable instructions executed by a computer, for example, a program module. Generally, the program module includes a routine, a program, an object, a component, a data structure, etc. for executing a specific task or implementing a specific abstract data type. The one or more embodiments of this specification can alternatively be practiced in a distributed computing environment. In the distributed computing environment, tasks are executed by remote processing devices that are connected through a communication network. In the distributed computing environment, a program module can be located in local and remote computer storage media including a storage device.

The embodiments of this specification are described in a progressive manner. For same or similar parts in the embodiments, refer to each other. Each embodiment focuses on a difference from other embodiments. Particularly, the system embodiment is basically similar to the method embodiment, and therefore is briefly described. For a related part, refer to some descriptions in the method embodiment.

The above-mentioned descriptions are merely embodiments of this specification, and are not intended to limit this specification. A person skilled in the art can make various modifications and changes to this specification. Any modification, equivalent replacement, improvement, etc. made without departing from the spirit and principle of this specification shall fall within the scope of the claims in this specification.

## Claims

1. A credit-based transaction processing method, applied to a transaction platform, wherein the method comprises:
querying, based on a credit payment channel selected by an institutional member of an institution for a commodity order, a payment configuration of the credit payment channel configured by a merchant;
determining a payment type of the institutional member in the credit payment channel based on the payment configuration and credit data;
sending a payment request for the commodity order to a payment platform upon determining that a payment condition in the payment type is triggered, to make a credit payment for the commodity order based on a credit account of the institutional member in the credit payment channel; and
obtaining a to-be-settled bill generated by the payment platform based on a credit payment result, to perform fund settlement processing with the credit payment channel for the to-be-settled bill by using an institutional account of the institution.

2. The credit-based transaction processing method according to claim 1, wherein determining a payment type of the institutional member in the credit payment channel based on the payment configuration and credit data comprises:
querying institutional credit data of the institution or member credit data of the institutional member, and determining a credit interval that matches the institutional credit data or the member credit data in the payment configuration; and
determining the payment type of the institutional member in the credit payment channel based on the credit interval.

3. The credit-based transaction processing method according to claim 2, wherein after the step of determining a payment type of the institutional member in the credit payment channel based on the payment configuration and credit data is performed, and before the step of sending a payment request for the commodity order to a payment platform upon determining that a payment condition in the payment type is triggered, to make a credit payment for the commodity order based on a credit account of the institutional member in the credit payment channel is performed, the method further comprises:
generating a delayed payment order based on the commodity order and a delayed payment time, and sending the delayed payment order to the payment platform; and
receiving a payment confirmation message returned by the payment platform, generating a transaction success reminder based on the payment confirmation message, and delivering the transaction success reminder to the institutional member.

4. The credit-based transaction processing method according to claim 2, wherein after the step of determining a payment type of the institutional member in the credit payment channel based on the payment configuration and credit data is performed, and before the step of sending a payment request for the commodity order to a payment platform upon determining that a payment condition in the payment type is triggered, to make a credit payment for the commodity order based on a credit account of the institutional member in the credit payment channel is performed, the method further comprises:
generating a real-time payment reminder, and delivering the real-time payment reminder to the institutional member; and
when a payment instruction submitted after the institutional member triggers the real-time payment reminder is detected, determining that a payment condition in a real-time payment type is triggered.

5. The credit-based transaction processing method according to claim 1, wherein after the step of obtaining a to-be-settled bill generated by the payment platform based on a credit payment result, to perform fund settlement processing with the credit payment channel for the to-be-settled bill by using an institutional account of the institution is performed, the method further comprises:
returning a to-be-settled bill list of the institutional member to the institution based on a bill query request submitted by the institution;
determining a target bill selected by the institution from the to-be-settled bill list, and sending the target bill to the payment platform; and
sending a settlement request to the payment platform based on a settlement instruction submitted by the institution for a settlement amount returned by the payment platform, to perform settlement processing on the target bill.

6. The credit-based transaction processing method according to claim 5, wherein after receiving the target bill, the payment platform performs the following operations:
detecting whether a fund repayment period recorded in the target bill expires;
upon detecting that the fund repayment period recorded in the target bill does not expire, returning a bill amount recorded in the target bill to the transaction platform as the settlement amount;
upon detecting that the fund repayment period recorded in the target bill expires, the following operations are performed:
calculating an actual repayment amount of the target bill based on the bill amount, the fund repayment period, and a calculation time in the target bill; and
returning the actual repayment amount to the transaction platform as the settlement amount.

7. The credit-based transaction processing method according to claim 1, wherein before the step of querying, based on a credit payment channel selected by an institutional member of an institution for a commodity order, a payment configuration of the credit payment channel configured by a merchant is performed, the method further comprises:
creating a commodity order of a commodity based on the commodity selected by the institutional member from a commodity list, and delivering the commodity order to the institutional member; and
determining a credit payment channel selected by the institutional member from a payment channel list for the commodity order.

8. The credit-based transaction processing method according to claim 1, wherein after the step of obtaining a to-be-settled bill generated by the payment platform based on a credit payment result, to perform fund settlement processing with the credit payment channel for the to-be-settled bill by using an institutional account of the institution is performed, the method further comprises:
generating a fund repayment reminder based on the to-be-settled bill, and delivering the fund repayment reminder to the institutional member;
transferring funds from a member account of the institutional member to the credit account based on a fund repayment instruction submitted after the institutional member triggers the fund repayment reminder; and
generating a to-be-repaid bill based on a fund transfer result and the to-be-settled bill, and delivering the to-be-repaid bill to the institution.

9. A credit-based transaction processing method, applied to a payment platform, wherein the method comprises:
receiving a payment request sent by a transaction platform for a commodity order after a payment condition in a payment type is triggered, wherein the payment type is determined based on a payment configuration of a credit payment channel configured by a merchant and credit data;
making a credit payment for the commodity order based on a credit account of an institutional member of an institution in the credit payment channel in response to the payment request; and
generating a to-be-settled bill based on a credit payment result, and returning the to-be-settled bill to the transaction platform, to perform fund settlement processing with the credit payment channel for the to-be-settled bill by using an institutional account of the institution.

10. The credit-based transaction processing method according to claim 9, wherein before the step of receiving a payment request sent by a transaction platform for a commodity order after a payment condition in a payment type is triggered is performed, the method further comprises:
receiving a delayed payment order generated by the transaction platform based on the commodity order and a delayed payment time; and
storing the delayed payment order, generating a payment confirmation message, and returning the payment confirmation message to the transaction platform.

11. The credit-based transaction processing method according to claim 9, wherein after the step of generating a to-be-settled bill based on a credit payment result, and returning the to-be-settled bill to the transaction platform, to perform fund settlement processing with the credit payment channel for the to-be-settled bill by using an institutional account of the institution is performed, the method further comprises:
receiving a target bill that is sent by the transaction platform and that is selected by the institution from a to-be-settled bill list of the institutional member;
detecting whether a fund repayment period recorded in the target bill expires; and
upon detecting that the fund repayment period recorded in the target bill does not expire, returning a bill amount recorded in the target bill to the transaction platform as a settlement amount.

12. The credit-based transaction processing method according to claim 11, wherein upon detecting that the fund repayment period recorded in the target bill expires, the following operations are performed:
calculating an actual repayment amount of the target bill based on the bill amount, the fund repayment period, and a calculation time in the target bill; and
returning the actual repayment amount to the transaction platform as the settlement amount.

13. A credit-based transaction processing apparatus, running on a transaction platform, wherein the apparatus is configured to perform the method according to any one of claims 1 to 8; or running on a payment platform, wherein the apparatus is configured to perform the method according to any one of claims 9 to 12.

14. A computing device comprising a memory and a processor, wherein the memory stores executable instructions that, in response to execution by the processor, cause the computing device to perform the method according to any one of claims 1 to 8 or claims 9-12.

15. A computer-readable storage medium comprising instructions stored therein that, when executed by a processor of a computing device, cause the computing device to perform the method according to any one of claims 1 to 8 or claims 9-12.
